# EUROPEAN PATENT APPLICATION

(11) **EP 3 885 214 A1**
(43) Date of publication of application: **29.09.2021**
(21) Application number: 19886907.5
(22) Date of filing: 19.11.2019
(51) Int. Cl.: B60W 30/06, B62D 6/00, B62D 5/04

(54) **STEERING DEVICE AND MOTOR CONTROL METHOD FOR STEERING DEVICE**

(30) Priority: 20.11.2018 JP 2018217608
(71) Applicant: JTEKT CORPORATION, Chuo-ku, Osaka-shi, Osaka 542-8502 (JP); NISSAN MOTOR CO., LTD., Yokohama-shi, Kanagawa 221-0023 (JP)
(72) Inventor: OSAJIMA, Shintaro, Yokohama-shi, Kanagawa 221-0023 (JP); UEDA, Taisuke, Yokohama-shi, Kanagawa 221-0023 (JP); YAMAMOTO, Yosuke, Yokohama-shi, Kanagawa 221-0023 (JP); ISHIMOTO, Masaya, Yokohama-shi, Kanagawa 221-0023 (JP); NAKASONE, Gempei, Osaka-shi, Osaka 542-8502 (JP); TAMAKI, Hiromasa, Osaka-shi, Osaka 542-8502 (JP); AONO, Shinya, Osaka-shi, Osaka 542-8502 (JP); YAMASHITA, Yoshihiro, Osaka-shi, Osaka 542-8502 (JP)
(74) Representative: Winter, Brandl - Partnerschaft mbB
(86) International application number: PCT/JP2019/045224
(87) International publication number: WO 2020/105620

(57) **Abstract**

This steering device is provided with: an electric motor that is capable of steering a turning wheel connected to a steering wheel; and a control unit that changes a steering angle of the turning wheel by controlling the electric motor. The control unit comprises: an angle feedback control unit capable of executing automatic traveling control in which feedback control is performed such that a first target steering angle, which is calculated to cause a vehicle to travel along a preset target path in a travel route, matches the actual steering angle and also capable of executing automatic parking control in which feedback control is performed such that a second target steering angle, which is calculated to cause the vehicle to move from a current position to a parking position, matches the actual steering angle; and a gain setting unit which sets a feedback gain for the automatic parking control to a value smaller than a feedback gain for the automatic traveling control.

## Description

### [Technical Field]

One aspect of the present invention relates to a steering device and a motor control method in steering device.

### [Background Art]

Automatic traveling control in the related art is known to calculate a target steering angle (target steering angle or target turning angle) for a vehicle to automatically travel along a target route set in a travel path and feedback-control a steering actuator so that an actual steering angle matches with the target steering angle (for example, see Patent Literature 1 below).

Further, automatic parking control is known to calculate a target steering angle to move a vehicle from a current position to an automatically detected parking position or a parking position designated by a driver and feedback-control a steering actuator so that an actual steering angle matches with the target steering angle (for example, see Patent Literature 2 below).

### [Prior Art Literature]

### [Patent Literature]

[Patent Literature 1] JP-A-2006-175940
[Patent Literature 2] JP-A-2008-80866

### [Summary of Invention]

### [Technical Problem]

When the automatic parking control and the automatic traveling control are executed, it is conceivable to similarly execute angle feedback control in each of the automatic parking control and the automatic traveling control. However, it has been found that when the same angle feedback control as the automatic traveling control is applied to the automatic parking control, vibration occurs in an electric motor which is the steering actuator during the automatic parking control, which leads to a strange feeling to the driver.

An object of the present invention is to provide a steering device and a motor control method in steering device that can perform automatic traveling control and automatic parking control and prevent vibration during the automatic parking control.

### [Solution to Problem]

According to the present invention, there is provided a steering device including: an electric motor configured to steer a steered wheel coupled to a steering wheel; and a control unit configured to control the electric motor and change a steering angle of the steered wheel. The control unit includes: an angle feedback control unit configured to execute automatic traveling control in which feedback control is performed so that an actual steering angle matches with a first target steering angle that is calculated for the vehicle to travel along a target route set in a travel path, and automatic parking control in which feedback control is performed so that an actual steering angle matches with a second target steering angle calculated for the vehicle to move from a current position to a parking position; and a gain setting unit configured to set a feedback gain in the automatic parking control to a value smaller than a feedback gain in the automatic traveling control.

With this configuration, it is possible to implement a steering device that can perform automatic traveling control and automatic parking control and prevent vibration during the automatic parking control.

In an embodiment of the present invention, the feedback control is proportional integral differential control, and the feedback gain includes a differential gain of the proportional integral differential control.

In an embodiment of the present invention, the feedback gain further includes a proportional gain of the proportional integral differential control.

In an embodiment of the present invention, the feedback gain further includes an integral gain of the proportional integral differential control.

In an embodiment of the present invention, the angle feedback control unit is configured to execute emergency avoidance support control in which, when a risk of collision with an obstacle in a vehicle traveling direction is detected, feedback control is performed so that an actual steering angle matches with a third target steering angle that is calculated to move the vehicle in a direction in which the obstacle is not present, and the gain setting unit sets a feedback gain in the emergency avoidance support control to a value larger than the feedback gain in the automatic traveling control.

According to the present invention, there is provided a motor control method in steering device. The steering device includes an electric motor configured to steer a steered wheel coupled to a steering wheel and is configured to execute automatic traveling control and automatic parking control. The automatic traveling control includes: calculating a first target steering angle for a vehicle to travel along a target route set in a travel path; and performing feedback control so that an actual steering angle matches with the first target steering angle. The automatic parking control includes: calculating a second target steering angle for the vehicle to move from a current position to a parking position; and performing feedback control so that an actual steering angle matches with the second target steering angle using a feedback gain set to a value smaller than a feedback gain in the automatic traveling control.

By this method, it is possible to perform automatic traveling control and automatic parking control and prevent vibration during the automatic parking control.

### [Brief Description of Drawings]

[Fig. 1] Fig. 1 shows a schematic configuration of an electric power steering system to which a steering device according to an embodiment of the present invention is applied.
[Fig. 2] Fig. 2 is a block diagram showing an electrical configuration of a motor control ECU.

### [Description of Embodiments]

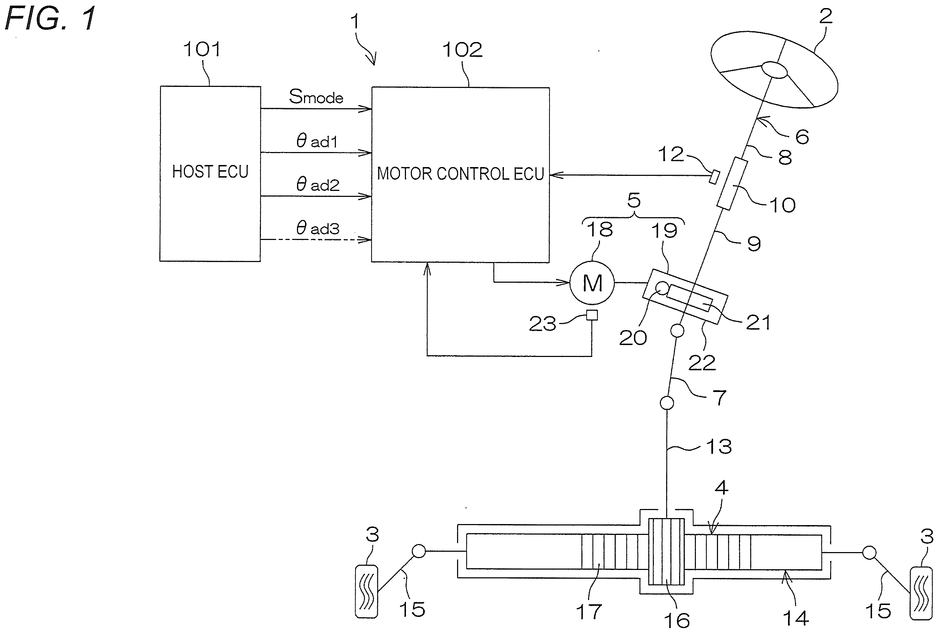

Fig. 1 shows a schematic configuration of an electric power steering system to which a steering device according to an embodiment of the present invention is applied.

An electric power steering system 1 includes a steering wheel 2 serving as a steering member that steers a vehicle, a steering mechanism 4 that steers steered wheels 3 in conjunction with rotation of the steering wheel 2, and a steering assist mechanism 5 that assists steering by a driver. The steering wheel 2 and the steering mechanism 4 are mechanically coupled via a steering shaft 6 and an intermediate shaft 7. As a result, the steering wheel 2 and the steered wheels 3 are mechanically coupled.

The steering shaft 6 includes an input shaft 8 coupled to the steering wheel 2 and an output shaft 9 coupled to the intermediate shaft 7. The input shaft 8 and the output shaft 9 are coupled via a torsion bar 10 to be rotatable relative to each other.

In the vicinity of the torsion bar 10 is disposed a torque sensor 12. The torque sensor 12 detects a steering torque T_{d} applied to the steering wheel 2 based on a relative rotational displacement amount between the input shaft 8 and the output shaft 9. In the present embodiment, the steering torque T_{d} detected by the torque sensor 12 is, for example, a positive value as a torque for steering to left and a negative value as a torque for steering to right, and the magnitude of the steering torque T_{d} increases as an absolute value thereof increases.

The steering mechanism 4 is a rack-and-pinion mechanism including a pinion shaft 13 and a rack shaft 14 serving as a steering shaft. The rack shaft 14 includes end portions coupled to corresponding steered wheels 3 via tie rods 15 and knuckle arms (not shown). The pinion shaft 13 is coupled to the intermediate shaft 7. The pinion shaft 13 rotates in conjunction with steering of the steering wheel 2. The pinion shaft 13 includes a distal end coupled to a pinion 16.

The rack shaft 14 extends linearly along a left-right direction of the vehicle. At an intermediate portion of the rack shaft 14 in the axial direction, a rack 17 meshes with the pinion 16. The pinion 16 and the rack 17 convert the rotation of the pinion shaft 13 into an axial movement of the rack shaft 14. By moving the rack shaft 14 in the axial direction, the steered wheels 3 can be steered.

When the steering wheel 2 is steered (rotated), the rotation is transmitted to the pinion shaft 13 via the steering shaft 6 and the intermediate shaft 7. The rotation of the pinion shaft 13 is converted into the axial movement of the rack shaft 14 by the pinion 16 and the rack 17. As a result, the steered wheels 3 are steered.

The steering assist mechanism 5 includes an electric motor 18 that generates a steering assist force (assist torque) and a speed reducer 19 that amplifies an output torque of the electric motor 18 and transmits the amplified output torque to the steering mechanism 4. The speed reducer 19 is a worm gear mechanism including a worm gear 20 and a worm wheel 21 that meshes with the worm gear 20.

The speed reducer 19 is accommodated in a gear housing 22 serving as a transmission mechanism housing. In the following description, a speed reduction ratio (gear ratio) of the speed reducer 19 may be represented by N. The speed reduction ratio N is defined as a ratio ω_{wg}/ω_{ww} of an angular velocity ω_{wg} of the worm gear 20 to an angular velocity ω_{ww} of the worm wheel 21.

The worm gear 20 is rotationally driven by the electric motor 18. The worm wheel 21 is coupled to the output shaft 9 to be rotatable together with the output shaft 9.

When the worm gear 20 is rotationally driven by the electric motor 18, the worm wheel 21 is rotationally driven, a motor torque is applied to the steering shaft 6, and the steering shaft 6 (output shaft 9) is rotated. The rotation of the steering shaft 6 is transmitted to the pinion shaft 13 via the intermediate shaft 7. The rotation of the pinion shaft 13 is converted into axial movement of the rack shaft 14. As a result, the steered wheels 3 are steered. As the steering shaft 6 rotates, the steering wheel 2 also rotates.

That is, by rotationally driving the worm gear 20 by the electric motor 18, steering assistance by the electric motor 18 and steering of the steered wheels 3 can be performed. The electric motor 18 is provided with a rotation angle sensor 23 that detects a rotation angle of a rotor of the electric motor 18.

In the following description, automatic traveling control refers to control in which feedback control is performed so that an actual steering angle matches with a target steering angle (hereinafter, referred to as a "first target steering angle"). The target steering angle is calculated for the vehicle to travel along a target route set in a travel path. The automatic traveling control includes, for example, lane keeping control in which feedback control is performed by setting the target route by continuously setting a target traveling position in a predetermined position in the lane width direction within a lane in order to maintain traveling in the predetermined position in the lane width direction within the lane, and preceding vehicle travel trajectory following control in which feedback control is performed by setting a travel trajectory of a preceding vehicle as the target route of a given vehicle. In addition to the above control, the automatic traveling control further includes, for example, automatic driving control in which feedback control is performed by setting a travel route from a current position to a destination, and automatic overtaking control in which feedback control is performed by setting a travel route for overtaking the preceding vehicle having a traveling speed lower than that of the given vehicle. In addition to the above control, the automatic traveling control further includes overall control in which feedback control is performed by setting a target travel route on a travel path (road) so that the actual steering angle matches with the target steering angle that is calculated for the vehicle to travel along the target route. The present embodiment will describe an aspect in which the lane keeping control is performed as the automatic traveling control. In the automatic parking control, feedback control is performed so that the actual steering angle matches with the target steering angle (hereinafter referred to as a "second target steering angle") that is calculated for the vehicle to move from a current position to a parking position. In the present embodiment, the "target steering angle" is a target rotation angle relative to the output shaft 9.

The electric power steering system 1 further includes a motor control ECU (control unit) 102. The steering torque T_{d} detected by the torque sensor 12 and an output signal of the rotation angle sensor 23 are input to the motor control ECU 102. The motor control ECU 102 controls the electric motor 18 based on these received signals and information received from a host ECU 101 on a vehicle side.

The host ECU 101 has a function of generating a first target steering angle θ_{ad1} for the vehicle to automatically travel along the target route and providing the first target steering angle θ_{ad1} to the motor control ECU 102 during the lane keeping control, and a function of generating a second target steering angle θ_{ad2} for the vehicle to move to a predetermined parking position and providing the second target steering angle θ_{ad2} to the motor control ECU 102 during the automatic parking control. Processing of generating the first target steering angle θ_{ad1} and the second target steering angle θ_{ad2} is well known and thus detailed description thereof will be omitted here.

The host ECU 101 further has a function of providing a control mode signal S_{mode} indicating a control mode set by the driver to the motor control ECU 102. The control mode includes a normal control mode performed during normal traveling, a lane keeping control mode for the lane keeping control, and an automatic parking control mode for the automatic parking control.

The first target steering angle θ_{ad1}, the second target steering angle θ_{ad2}, and the control mode signal S_{mode} generated by the host ECU 101 are provided to the motor control ECU 102 via, for example, an in-vehicle network.

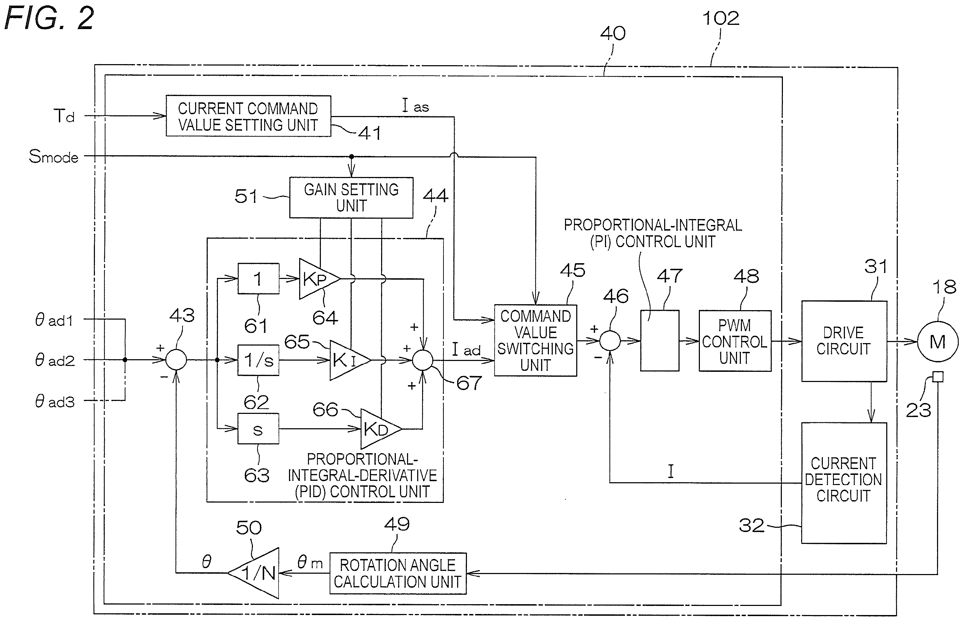

Fig. 2 is a block diagram showing an electrical configuration of the motor control ECU 102.

The motor control ECU 102 includes a microcomputer 40, a drive circuit (inverter circuit) 31 that is controlled by the microcomputer 40 and supplies electric power to the electric motor 18, and a current detection circuit 32 that detects a current (hereinafter referred to as a "motor current I") flowing through the electric motor 18.

The microcomputer 40 includes a CPU and a memory (ROM, RAM, nonvolatile memory, and the like), and functions as a plurality of functional processing units by executing predetermined programs. The plurality of functional processing units include a current command value setting unit 41, an angle deviation calculation unit 43, a proportional-integral-derivative (PID) control unit 44 (angle feedback control unit), a command value switching unit 45, a current deviation calculation unit 46, a proportional-integral (PI) control unit 47, a PWM control unit 48, a rotation angle calculation unit 49, a speed reduction ratio division unit 50, and a gain setting unit 51.

The current command value setting unit 41 calculates a current command value Iₐₛ for the electric motor 18 in the normal control mode based on the steering torque T_{d}. The current command value Iₐₛ is positive for the positive value of the steering torque T_{d}, and generates a steering assist force for steering to the left from the electric motor 18. The current command value Iₐₛ is negative for the negative value of the steering torque T_{d}, and generates a steering assist force for steering to the right from the electric motor 18. The current command value Iₐₛ is set such that an absolute value of the current command value Iₐₛ increases as the absolute value of the steering torque T_{d} increases. The current command value Iₐₛ calculated by the current command value setting unit 41 is input to the command value switching unit 45.

The rotation angle calculation unit 49 calculates a rotor rotation angle θₘ of the electric motor 18 based on the output signal of the rotation angle sensor 23. The speed reduction ratio division unit 50 divides the rotor rotation angle θₘ calculated by the rotation angle calculation unit 49 by the speed reduction ratio N to convert the rotor rotation angle θₘ into a rotation angle (actual steering angle) θ of the output shaft 9. The actual steering angle θ calculated by the speed reduction ratio division unit 50 is provided to the angle deviation calculation unit 43.

The angle deviation calculation unit 43 calculates a deviation Δθ (= (θ_{ad1} - θ) or (θ_{ad2} - θ)) between the first target steering angle θ_{ad1} or the second target steering angle θ_{ad2} output from the host ECU 101 and the actual steering angle θ.

The PID control unit 44 calculates a current command value I_{ad} by performing PID calculation on the angle deviation Δθ calculated by the angle deviation calculation unit 43. Specifically, the PID control unit 44 includes a proportional processing unit 61, an integral processing unit 62, a differential processing unit 63, a proportional gain multiplication unit 64, an integral gain multiplication unit 65, a differential gain multiplication unit 66, and an addition unit 67.

The proportional gain multiplication unit 64 multiplies the angle deviation Δθ after being proportionally processed by the proportional processing unit 61 by a proportional gain K_{P} provided by the gain setting unit 51. The integral gain multiplication unit 65 multiplies the angle deviation Δθ after being integrally processed by the integral processing unit 62 by an integral gain K_{I} provided by the gain setting unit 51. The differential gain multiplication unit 66 multiplies the angle deviation Δθ after being differentially processed by the differential processing unit 63 by a differential gain K_{D} provided by the gain setting unit 51. Details of the operation of the gain setting unit 51 will be described later.

The addition unit 67 adds multiplication results of the proportional gain multiplication unit 64, the integral gain multiplication unit 65, and the differential gain multiplication unit 66, thereby calculating the current command value I_{ad} for the electric motor 18 in the lane keeping control mode or the automatic parking control mode. The current command value I_{ad} calculated by the PID control unit 44 is input to the command value switching unit 45.

The command value switching unit 45 selects and outputs the current command value Iₐₛ when the control mode signal Smode is a signal indicating the normal control mode, and selects and outputs the current command value I_{ad} when the control mode signal S_{mode} is a signal indicating the lane keeping control mode or a signal indicating the automatic parking control mode. The output of the command value switching unit 45 is provided to the current deviation calculation unit 46.

The current deviation calculation unit 46 calculates a deviation ΔI (= (Iₐₛ - I) or (I_{ad} - I)) between the current command value Iₐₛ or I_{ad} received from the command value switching unit 45 and the motor current I detected by the current detection circuit 32.

The PI control unit 47 performs proportional-integral calculation (PI calculation) on the current deviation ΔI calculated by the current deviation calculation unit 46, thereby generating a drive command value for leading the motor current I flowing through the electric motor 18 to the current command value Iₐₛ or I_{ad}. The PWM control unit 48 generates a PWM control signal having a duty ratio corresponding to the drive command value, and provides the PWM control signal to the drive circuit 31. As a result, electric power corresponding to the drive command value is supplied to the electric motor 18.

In the above-described configuration, when the control mode is set to the normal control mode, the current command value Iₐₛ set by the current command value setting unit 41 is output from the command value switching unit 45. Accordingly, an assist torque corresponding to the steering torque T_{d} is generated from the electric motor 18.

When the control mode is set to the lane keeping control mode, the host ECU 101 provides the first target steering angle θ_{ad1} to the motor control ECU 102. Then, the PID control unit 44 performs PID calculation on the angle deviation Δθ (= θ_{ad1} - θ) between the first target steering angle θ_{ad1} and the actual steering angle θ. As a result, the current command value I_{ad} for the lane keeping control is calculated. Since the current command value I_{ad} is output from the command value switching unit 45, the drive circuit 31 is driven and controlled so that the motor current I matches with the current command value I_{ad}. As a result, the electric motor 18 is controlled so that the actual steering angle θ matches with the first target steering angle θ_{ad1}.

When the control mode is set to the automatic parking control mode, the host ECU 101 provides the second target steering angle θ_{ad2} to the motor control ECU 102. Then, the PID control unit 44 performs PID calculation on the angle deviation Δθ (= θ_{ad2} - θ) between the second target steering angle θ_{ad2} and the actual steering angle θ. As a result, the current command value I_{ad} for the automatic parking control is calculated. Since the current command value I_{ad} is output from the command value switching unit 45, the drive circuit 31 is driven and controlled so that the motor current I matches with the current command value I_{ad}. As a result, the electric motor 18 is controlled so that the actual steering angle θ matches with the second target steering angle θ_{ad2}.

Hereinafter, the operation of the gain setting unit 51 will be described in detail.

The gain setting unit 51 sets the proportional gain K_{P}, the integral gain K_{I}, and the differential gain K_{D} in accordance with the control mode signal S_{mode} provided by the host ECU 101. A more specific description will be given below. The proportional gain Kp, the integral gain K_{I}, and the differential gain K_{D} that are set when the control mode is the lane keeping control mode are referred to as a first proportional gain K_{P1}, a first integral gain K_{I1}, and a first differential gain K_{D1}, respectively. In contrast, the proportional gain Kp, the integral gain K_{I}, and the differential gain K_{D} that are set when the control mode is the automatic parking control mode are referred to as a second proportional gain K_{P2}, a second integral gain K_{I2}, and a second differential gain K_{D2}, respectively.

The second proportional gain K_{P2}, the second integral gain K_{I2}, and the second differential gain K_{D2} are set to values smaller than the first proportional gain K_{P1}, the first integral gain K_{I1}, and the first differential gain K_{D1}, respectively. A reason for this will be described below.

The vehicle speed during the lane keeping control is usually higher than the vehicle speed during the automatic parking control, and thus higher responsiveness is required in the lane keeping control than in the automatic parking control. For this reason, the first proportional gain K_{P1}, the first integral gain K_{I1}, and the first differential gain K_{D1} during the lane keeping control are set to relatively large values. In this way, it has been found that, when the feedback gains K_{P1}, K_{I1}, and K_{D1} of the lane keeping control are set to relatively large values and then the feedback gains K_{P2}, K_{I2}, and K_{D2} of the automatic parking control are set to the same values as the feedback gains K_{P1}, K_{I1}, and K_{D1} of the lane keeping control, the responsiveness to the vehicle speed during the automatic parking control is excessively high, and thus vibration occurs to the electric motor 18 during the automatic parking control, which leads to a strange feeling to the driver.

In the present embodiment, in order to prevent vibration of the electric motor 18 that occurs during the automatic parking control, the second proportional gain K_{P2}, the second integral gain K_{I2}, and the second differential gain K_{D2} are set to values smaller than the first proportional gain K_{P1}, the first integral gain K_{I1}, and the first differential gain K_{D1}, respectively. As a result, it is possible to prevent vibration of the electric motor 18 that occurs during the automatic parking control.

In this way, when the feedback gains K_{P2}, K_{I2}, and K_{D21} of the automatic parking control are set to values smaller than the feedback gains K_{P1}, K_{I1}, and K_{D1} of the lane keeping control, the responsiveness during the automatic parking control is reduced. The automatic parking control is not hindered since high responsiveness is not required for the automatic parking control compared to the lane keeping control.

Further, among the second proportional gain K_{P2}, the second integral gain K_{I2}, and the second differential gain K_{D2}, only the second differential gain K_{D2} may be set to a value smaller than the first differential gain K_{D1}. Further, among the second proportional gain K_{P2}, the second integral gain K_{I2}, and the second derivative gain K_{D2}, the second derivative gain K_{D2} and the second proportional gain K_{P2} other than the second integral gain K_{I2} may be set to values smaller than the first derivative gain K_{D1} and the first proportional gain K_{P1}, respectively.

That is, among the second proportional gain K_{P2}, the second integral gain K_{I2}, and the second differential gain K_{D2}, at least the second differential gain K_{D2} is set to a value smaller than the first differential gain K_{D1} so that vibration of the electric motor 18 during the automatic parking control can be prevented. However, it is preferable that the second differential gain K_{D2} and the second proportional gain K_{P2} are set to values smaller than the first differential gain K_{D1} and the first proportional gain K_{P1}, respectively. As a result, vibration of the electric motor 18 during the automatic parking control can be prevented more effectively than in a case where only the second differential gain K_{D2} is set to a value smaller than the first differential gain K_{D1}.

It is more preferable that the second proportional gain K_{P2}, the second integral gain K_{I2}, and the second differential gain K_{D2} are set to values smaller than the first proportional gain K_{P1}, the first integral gain K_{I1}, and the first differential gain K_{D1}, respectively. This can improve the stability of the PID control system.

Accordingly, it is most preferable that all of the second proportional gain K_{P2}, the second integral gain K_{I2}, and the second differential gain K_{D2} are set to values smaller than the first proportional gain K_{P1}, the first integral gain K_{I1}, and the first differential gain K_{D1}, respectively. Next, it is preferable that two of the second differential gain K_{D2} and the second proportional gain K_{P2} are set to values smaller than the first differential gain K_{D1} and the first proportional gain K_{P1}, respectively. However, as long as at least the second differential gain K_{D2} is set to a value smaller than the first differential gain K_{D1}, it is possible to achieve an effect of preventing vibration of the electric motor 18 during the automatic parking control.

Although one embodiment of the present invention has been described above, the present invention can be implemented by other embodiments. For example, in the above-described embodiment, the host ECU 101 has a function of generating the first target steering angle θ_{ad1} for the lane keeping control and the second target steering angle θ_{ad2} for the automatic parking control and providing the first target steering angle θ_{ad1} and the second target steering angle θ_{ad2} to the motor control ECU 102. However, the host ECU 101 may have a function of generating a third target steering angle θ_{ad3} for emergency avoidance support control and providing the third target steering angle θ_{ad3} to the motor control ECU 102 in addition to the above function, as is shown by two-dot chain lines in Figs. 1 and 2.

The emergency avoidance support control refers to control in which feedback control is performed by, when a risk of collision with an obstacle in the vehicle traveling direction is detected, calculating the target steering angle (third target steering angle) θ_{ad3} for moving the vehicle in a direction in which the obstacle is not present so that the actual steering angle matches with the third target steering angle θ_{ad3}. In this case, an emergency avoidance support control mode for the emergency avoidance support control is added to the normal control mode, the lane keeping control mode, and the automatic parking control mode described above as types of the control mode.

When the control mode is the emergency avoidance support control mode, the third target steering angle θ_{ad3} from the host ECU 101 is input to the angle deviation calculating unit 43. When the control mode is the emergency avoidance support control mode, the gain setting unit 51 sets the proportional gain K_{P}, the integral gain K_{I}, and the differential gain K_{D} to a third proportional gain K_{P3}, a third integral gain K_{I3}, and a third differential gain K_{D3}, respectively. In this case, the third proportional gain K_{P3}, the third integral gain K_{I3}, and the third differential gain K_{D3} are set to values larger than the first proportional gain K_{P1}, the first integral gain K_{I1}, and the first differential gain K_{D1}, respectively. This is because higher responsiveness is required in the emergency avoidance support control than in the lane keeping control.

Further, among the third proportional gain K_{P3}, the third integral gain K_{I3}, and the third differential gain K_{D3}, only the third differential gain K_{D3} may be set to a value larger than the first differential gain K_{D1}. Further, among the third proportional gain K_{P3}, the third integral gain K_{I3}, and the third derivative gain K_{D3}, the third derivative gain K_{D3} and the third proportional gain K_{P3} other than the third integral gain K_{I3} may be set to values larger than the first derivative gain K_{D1} and the first proportional gain K_{P1}, respectively.

In addition, the above-described embodiment described an example in which the present invention is applied to a column type EPS, and the present invention can also be applied to an EPS other than the column type EPS. The present invention can also be applied to a steer-by-wire system.

In addition, various design changes can be made to the present invention within the scope of the matters described in the claims.

The present application is based on a Japanese Patent Application (No. 2018-217608) filed on Nov. 20, 2018, contents of which are incorporated herein by reference.

### [Reference Sign List]

- 1: electric power steering device
- 3: steering wheel
- 4: steering mechanism
- 18: electric motor
- 40: microcomputer
- 41: current command value setting unit
- 43: angle deviation calculation unit
- 44: proportional-integral-derivative (PID) control unit
- 45: command value switching unit
- 46: current deviation calculation unit
- 47: proportional-integral (PI) control unit
- 48: PWM control unit
- 49: rotation angle calculation unit
- 50: reduction ratio division unit
- 51: gain setting unit
- 101: host ECU
- 102: motor control ECU

## Claims

1. A steering device comprising:
an electric motor configured to steer a steered wheel coupled to a steering wheel; and
a control unit configured to control the electric motor and change a steering angle of the steered wheel, and
wherein the control unit includes:
an angle feedback control unit configured to execute automatic traveling control in which feedback control is performed so that an actual steering angle matches with a first target steering angle calculated for a vehicle to travel along a target route set in a travel path, and automatic parking control in which feedback control is performed so that an actual steering angle matches with a second target steering angle calculated for the vehicle to move from a current position to a parking position; and
a gain setting unit configured to set a feedback gain in the automatic parking control to a value smaller than a feedback gain in the automatic traveling control.

2. The steering device according to claim 1,
wherein the feedback control is proportional integral differential control, and
wherein the feedback gain includes a differential gain of the proportional integral differential control.

3. The steering device according to claim 2,
wherein the feedback gain further includes a proportional gain of the proportional integral differential control.

4. The steering device according to claim 3,
wherein the feedback gain further includes an integral gain of the proportional integral differential control.

5. The steering device according to any one of claims 1 to 4,
wherein the angle feedback control unit is configured to execute emergency avoidance support control in which, when a risk of collision with an obstacle in a vehicle traveling direction is detected, feedback control is performed so that an actual steering angle matches with a third target steering angle that is calculated to move the vehicle in a direction in which the obstacle is not present, and
wherein the gain setting unit sets a feedback gain in the emergency avoidance support control to a value larger than the feedback gain in the automatic traveling control.

6. A motor control method in steering device, the steering device including an electric motor configured to steer a steered wheel coupled to a steering wheel and being configured to execute automatic traveling control and automatic parking control,
wherein the automatic traveling control includes:
calculating a first target steering angle for a vehicle to travel along a target route set in a travel path; and
performing feedback control so that an actual steering angle matches with the first target steering angle, and
wherein the automatic parking control includes:
calculating a second target steering angle for the vehicle to move from a current position to a parking position; and
performing feedback control so that an actual steering angle matches with the second target steering angle using a feedback gain set to a value smaller than a feedback gain in the automatic traveling control.
